# EUROPÄISCHE PATENTANMELDUNG

(11) **EP 3 326 982 A1**
(43) Veröffentlichungstag der Anmeldung: **30.05.2018**
(21) Anmeldenummer: 16201213.2
(22) Anmeldetag: 29.11.2016
(51) Int. Cl.: C04B 35/01, C04B 35/103, C04B 35/515, C04B 35/63, C04B 35/632, C04B 35/634, C04B 35/636

(54) **KOHLENSTOFFGEBUNDENE FEUERFESTE FORMKÖRPER UND VERFAHREN ZU IHRER HERSTELLUNG**

(71) Anmelder: RÜTGERS Germany GmbH, 44579 Castrop-Rauxel (DE)
(72) Erfinder: Aneziris, Christos, G., 09599 Freiberg (DE); Ludwig, Susann, 09599 Freiberg (DE); Jacob, Christoph, 45355 Essen (DE); Boenigk, Winfried, 59348 Lüdinghausen (DE); Braun, Markus, 58256 Ennepetal (DE)
(74) Vertreter: Cohausz & Florack

(57) **Zusammenfassung**

In einem Verfahren zur Herstellung eines kohlenstoffgebundenen Feuerfesterzeugnisses werden feuerfeste Rohstoffe mit einem Bindemittel im Kaltmischverfahren gemischt, in einen Formkörper überführt und der Formkörper vor oder während der Anwendung als Feuerfesterzeugnis einer Verkokungsbehandlung unterzogen, wobei das Bindemittel Steinkohlenteer- oder Petropech und ein niedermolekulares Kohlenhydrat enthält und sich der Formkörper durch eine besondere Verteilung des Porenvolumens auszeichnet.

## Beschreibung

### TECHNISCHES FELD DER ERFINDUNG

Die Erfindung betrifft ein Verfahren zur Herstellung von kohlenstoffgebundenen Feuerfesterzeugnissen mit verbesserten Thermoschockeigenschaften, die dadurch erhaltenen Feuerfestkörper sowie die Verwendung niedermolekularer Kohlenhydrate als Bindemittel bei der Herstellung der Feuerfestkörper.

### HINTERGRUND DER ERFINDUNG

Kohlenstoffgebundene feuerfeste Erzeugnisse finden einen breiten Einsatz als Auskleidung in metallurgischen Gefäßen, wie als Magnesiasteine im Konverter, oder als Schlüsselbauteile, wie Tauchausgüsse, Schieberplatten, Stopfen oder Gießrinnen im Stranggussbereich. Kohlenstoffgebundene feuerfeste Erzeugnisse werden ferner im Hochofenbereich, in Transportgefäßen, beispielsweise Pfannen, in der chemischen Industrie oder in der Müllverbrennungsindustrie als temperaturfeste Rohre oder in der Zementindustrie als Auskleidungsmaterial eingesetzt.

Als Bindemittel dienen beispielsweise Kunstharze und hier vorzugsweise Phenolharze (Resole oder Novolake), sowie kohle- oder erdölstämmige Bindemittel. Vorteil der Kunstharze ist die Verarbeitbarkeit bei Raumtemperatur, während kohle- und erdölstämmige Bindemittel auf ein Warmmischverfahren angewiesen sind. Kunstharzbinder bilden durch Tempern mit nachfolgender Verkokung ein isotropes Kohlenstoffnetzwerk. Dieses isotrope Bindemittelnetzwerk ist oxidationsanfällig, weshalb in der Rezeptur meist Kohlenstoff in Form von Carbon Black oder Graphit zu finden ist. Neben der Oxidationsbeständigkeit wird durch den Zusatz von Kohlenstoff auch die Schlackeresistenz verbessert.

In der DE 199 54 893 A1 werden graphitische Strukturen schon unter 1.000 °C durch Zugabe katalytisch aktiver Additive aus der Gruppe der leicht reduzierbaren Verbindungen der Übergangselemente, insbesondere Metallocene, Metallobenzoate oder Metallonaphthenate des Kupfers, des Chroms, des Nickels oder des Eisens in situ erzeugt. Phenolharzen werden auch hochschmelzende kohlestämmige Pulverharze (CARBORES^{®}) mit Verkokungsrückstand nach DIN 51905 von über 80 % und Benzo[a]pyrengehalten von kleiner 500 mg/kg nach EN 1014-3 zugesetzt (Benzo[a]pyren = BaP), um bindende graphitische Strukturen zu erzeugen.

Zur Verfestigung benötigen kunstharzbasierte Bindemittel ein Vernetzungsmittel. Das gebräuchlichste Mittel ist Hexamethylentetramin. Neben freiem Phenol aus dem Phenolharz werden bei Vernetzen und Verkoken Formaldehyd, Ammoniak und andere leichtflüchtige Stoffe freigesetzt. Formaldehyd ist als krebserzeugend eingestuft.

Kohlestämmige Bindemittel bilden beim Verkoken graphitische Strukturen, die deutlich oxidationsstabiler sind als vernetzte Strukturen. Allerdings sind wegen des Gehalts an polyzyklischen aromatischen Kohlenwasserstoffen (PAK's) diese Bindemittel ebenfalls als krebserzeugend eingestuft. Zur Verarbeitung ist ein Warmmischprozess notwendig. Erst durch die EP 1 704 128 A1 wird ein Bindemittelsystem bereitgestellt, das ein pulverförmiges, graphitierbares Steinkohlenteerpech mit einem Benzo(a)pyrengehalt kleiner 500 mg/kg und einem Verkokungsrückstand von mindestens 80 Gew.% nach DIN 51905 und ein bei Raumtemperatur flüssiges graphitierbares Bindemittel mit einem Verkokungsrückstand von mindestens 15 Gew.% und einem Benzo[a]pyren-Gehalt von kleiner 500 mg/kg nach EN 1014-3 einsetzt und ein Kaltmischverfahren erlaubt. Das bei Raumtemperatur flüssige Bindemittel trägt zu einem geringen Anteil zur Koksstruktur bei und wirkt somit auch als permanentes Bindemittel. Es wirkt zumindest aber auch teilweise als temporäres Bindemittel bis zum Zeitpunkt der Verkokung.

### ZUSAMMENFASSUNG DER ERFINDUNG

Der Erfindung liegt die technische Aufgabe zugrunde, ein kennzeichnungsfreies temporäres Bindemittel zu finden, das in Kombination mit einem graphitierbaren Bindemittel im Mischer kalt verarbeitbar ist und dennoch eine anisotrope Koksstruktur bildet. Die Formgebung soll mit üblichen Kompaktierungsverfahren und bei höherwertigen Produkten durch Pressen erfolgen. Von Vorteil wäre ferner der Ersatz üblicher Lösungsmittel durch wässrige Systeme.

Gelöst wird diese Aufgabe durch ein Verfahren zur Herstellung eines kohlenstoffgebundenen Feuerfesterzeugnisses, in dem feuerfeste Rohstoffe (Trockenstoffe) mit einem Bindemittel im Kaltmischverfahren gemischt, in einen Formkörper überführt und der Formkörper vor oder während der Anwendung als Feuerfesterzeugnis einer Verkokung unterzogen wird, wobei das Bindemittel Steinkohlenteer- oder Petropech und ein Kohlenhydrat enthält. Folglich wird als kennzeichnungsfreies temporäres Bindemittel ein Kohlenhydrat oder ein Gemisch von Kohlenhydraten eingesetzt, die klebende Eigenschaften besitzen.

Die erfindungsgemäß eingesetzten temporären Bindemittel sind frei von Verunreinigungen, die katalytisch den Abbrand desselben fördern. Der Vorteil des erfindungsgemäß erhaltenen Feuerfesterzeugnisses gegenüber solchen Feuerfesterzeugnissen, die mit dem Bindemittelsystem der EP 1 704 128 B1 erzeugt wurden, besteht darin, dass die Arbeitsplatz- und Umweltverträglichkeit des Bindemittels weiter gesteigert wurde.

Gegenstand der Erfindung ist ferner ein nach dem erfindungsgemäßen Verfahren erhaltener feuerfester Formkörper sowie die Verwendung von Kohlenhydraten als Bindemittel bei der Herstellung von Feuerfesterzeugnissen. Der erfindungsgemäße Feuerfestformkörper weist eine zu in analoger Weise mit Harz als Bindemittel hergestellten Formkörpern verschiedene Porengrößenverteilung, gemessen durch Quecksilberintrusion auf. Insbesondere ist der der erfindungsgemäße Feuerfestkörper gekennzeichnet durch eine oder mehrere der folgenden Kennzahlen:
30 Vol.-% des Porenvolumens aus Poren mit einem Porendurchmesser von größer als 1,0 µm, insbesondere 1,3 µm,
50 Vol.-% des Porenvolumens aus Poren mit einem Porendurchmesser von größer als 500 nm oder
70 Vol.-% des Porenvolumens aus Poren mit einem Porendurchmesser von größer als 200 nm.

### DETAILLIERTE BESCHREIBUNG DER ERFINDUNG

Produkt des erfindungsgemäßen Verfahrens kann ein unverkokter Formkörper nach der Formgebung sein. Dieser Formkörper kann als Bauteil beispielsweise zu Auskleidungzwecken verwendet und vor der ersten Verwendung durch thermische Behandlung verkokt werden. Die Verkokung findet in diesem Fall folglich am Einsatzort der Feuerfestmischung statt. Produkt des erfindungsgemäßen Verfahrens kann aber auch der verkokte und auf Endformat nachbearbeitete Feuerfestformkörper sein.

Das erfindungsgemäße verwendete Bindemittelsystem umfasst vorzugsweise ein pulverförmiges, graphitierbares Steinkohlenteerpech vorzugsweise mit einem Benzo(a)pyrengehalt kleiner 500 mg/kg nach EN 1014-3 und einem Verkokungsrückstand von mindestens etwa 80 Gew.-% nach DIN 51905 als sogenannten permanenten Binder. Die Herstellung eines solchen pulverförmigen, graphitierbaren Steinkohlenteerpechs mit einem Benzo(a)pyrengehalt von kleiner 500 mg/kg ist beispielsweise in der EP 0 510 315 B1 beschrieben, und das Pech selbst ist unter der Marke CARBO-RES^{®} bekannt und im Handel erhältlich.

Die Menge des als Bindemittel eingesetzten Pechs, bezogen auf die Masse der Trockenstoffe, kann beispielsweise 2 bis 20 Gew.-%, vorzugsweise 3 bis 8 Gew.-%, betragen.

Das erfindungsgemäß eingesetzte Bindemittel enthält darüber hinaus ein temporäres Bindemittel. Erfindungsgemäß wird unter einem temporären Bindemittel ein Bindemittel verstanden, das bei der Verkokung zersetzt wird, aber wesentlich zu der für das Kaltmischen und die Formung erforderlichen Klebrigkeit und zu der nach der Formung für Transportzwecke erforderlichen Festigkeit des unverkokten Erzeugnisses beiträgt.

Die Trockenstoffe einer Feuerfestmischung umfassen nicht die Bindemittel und Hilfsstoffe (Additive) der Feuerfestmischung. Die Menge des erfindungsgemäß als temporären Bindemittel eingesetzten Kohlenhydrats, bezogen auf die Masse der Trockenstoffe, kann beispielsweise 3 bis 15 Gew.-% wasserfrei, vorzugsweise 5 bis 10 Gew.-% wasserfrei, betragen.

Erfindungsgemäß geeignete temporäre Bindemittel umfassen Kohlenhydrate, die in einem wässrigen Gemisch und/oder als wässrige Lösung vorliegen können und eine klebrig machende oder klebende Wirkung entfalten. Besonders geeignet sind niedermolekulare Kohlenhydrate mit bis zu sechs Monosaccharid-Einheiten oder einem Molekulargewicht von bis zu 1.000 Da, vorzugsweise bis zu 500 Da. Besonders geeignete Saccharide sind folglich Mono-, Di- und Oligosaccharide mit bis zu sechs Monosaccharid-Einheiten sowie Gemische derselben. Die Kohlenhydrate können in Form eines Sirups der Trockenstoffmasse zugesetzt werden.

Geeignete temporäre Bindemittel sind beispielsweise Glucose, Fructose, Sorbitol Mannose, Xylose, Arabinose, Galactose. Geeignete Disaccharide umfassen Maltose, Saccharose, Cellobiose und Lactose. Geeignete Oligosaccharide sind Dextrine, Raffinosen, Oligofructosen und Kombinationen derselben.

Unter dem Begriff Kaltmischen versteht der einschlägige Fachmann üblicherweise ein Mischen der Trockenstoffe, Bindemittel und Additive einer Feuerfestmischung bei einer Temperatur von Umgebungstemperatur bis zu 50 °C.

Bei hochkonzentrierten Kohlenhydratlösungen kann wirtschaftlicher die Mischtemperatur beim Mischen der Trockenstoffe, Bindemittel und Hilfsstoffe moderat angehoben werden, um die Viskosität der Kohlenhydratlösung zu verringern als die Viskosität durch Verdünnen mit Wasser zu senken. Das Wasser müsste energetisch ungünstiger wieder entfernt werden.

Bei Bindemitteln, die Hydroxylgruppen enthalten wie Phenolharze werden in der Regel 10% [w/w] Vernetzer, meist Hexamethylentetramin, eingesetzt. Überraschenderweise wurde gefunden, dass bei Kohlenhydraten die Menge der Vernetzer stark reduziert und sogar ganz weggelassen werden kann. Dies trägt weiter zur Verminderung von Emissionen im Prozess bei und verringert wegen reduzierter Gasbildung die Porosität und erhöht die verkokte Dichte.

Der Feuerfestmischung können neben den zuvor genannten Bindemitteln zusätzliche Kohlenstoffträger hinzugefügt werden. Diese können ausgewählt sein aus Graphit, Ruß, Koks, Graphen, Kohlenstofffasern und/oder Carbonnanotubes (CNT).

Die feuerfesten Rohstoffe sind solche Trockenstoffe, die üblicherweise in Feuerfestmischungen verwendet werden. Die eingesetzten Körnungen können oxidische, nicht-oxidische, natürliche oder synthetische Rohstoffe, Kohlenstoff oder metallische Körnungen sein. Die Teilchengrößen der eingesetzten feuerfesten Rohstoffe liegen im Bereich von 30 nm bis 30 mm. Dabei handelt es sich um fein- und grobkörnige Stoffe mit oder ohne Kohlenstoffzusatz. Als feinkörnige Rohstoffe werden natürliche oder synthetische Rohstoffe mit einer Korngröße von bis zu 100 µm bezeichnet. Als grobkörnige Rohstoffe werden natürliche oder synthetische Rohstoffe mit einer Korngröße von größer als 100 µm bezeichnet.

Als oxidische Körnungen können beispielsweise Calciumoxid, Magnesiumoxid, Dolomit, Chromoxid, Aluminiumoxid, Mullit, Zirkonmullit, Zirkoniumdioxid, Magnesiumaluminatspinell, Bauxit, Yttriumoxid, Titandioxid oder Kombinationen dieser Stoffe eingesetzt werden.

Als nicht-oxidische Körnungen können Siliziumkarbid, Siliziumnitrid, Bornitrid, Borkarbid und Kohlenstoff in dem Trockenstoff verwendet werden.

Zur Erzielung von hohen Festigkeiten nach einer Thermoschockbeanspruchung und zum Sauerstoffschutz können zusätzlich 0,05 bis 20 Gew.-% feingepulverte Metalle oder Legierungen auf Siliziumbasis, bezogen auf die Masse der Trockenstoffe, zugesetzt werden.

Ferner können 0,05 bis 10 Gew.-%, bezogen auf die Masse der Trockenstoffe, an feingemahlenem Flussmittel, ausgewählt aus Natrium- und Kaliumwasserglas, verschiedene Fritten, Bortrioxid, Natriumtetraborat (Borax), Borsäure, Feldspat sowie Gemische dieser Materialien, zugesetzt werden.

Auch können 0,05 bis 20 Gew.-% feines Siliziumdioxid, Kieselglas, Quarzglas, Silica und deren Gemische, jeweils bezogen auf die Masse der Trockenstoffe, zugesetzt werden.

Zur Optimierung der Oxidationsbeständigkeit des erfindungsgemäßen Bindemittelsystems können den Trockenstoffen weitere feinkörnige Additive wie Al, Si, Mg, Fe oder Karbide, wie SiC, B₄C, TiC, oder Nitride, wie Si₃N₄, AIN, TiN, oder Boride wie BN oder TiB₂ zugesetzt werden. Die Menge dieses Zusatzes kann 0,05 bis 10 Gew.-%, bezogen auf die Masse der Trockenstoffe betragen.

Tenside können die Affinität des wässrigen Kohlenhydrats zu den Feststoffkomponenten der Masse begünstigen. Deren Anteil kann 0,01 bis 1 Gew.-%, bezogen auf die Masse der Trockenstoffe, betragen. Darüber hinaus können Additive verwendet werden, die bei Temperaturen im flüssigen Stahl eine Selbstglasur bilden und daher befähigt sind, gegebenenfalls entstehende Spannungsrisse zu heilen.

Erfindungsgemäß können beispielsweise 0,05 bis 5 Gew.-% Alkylenglykole wie Ethylenglykol als Hilfsmittel für die Formgebung bei der Aufbereitung der Masse in einem Mischer zugesetzt werden. Erfindungsgemäß kann die Zugabe von Titandioxid zur Masse die thermomechanischen Eigenschaften der kohlenstoffgebundenen feuerfesten Formkörper und Massen erhöhen. Trennhilfsmittel wie Magnesiumstearat können verwendet werden, um die Fließfähigkeit des Granulats nach dem Granulierprozess zu verbessern.

Das erfindungsgemäß eingesetzte Binder-System in Kombination mit einer refraktären Trockenstoffmischung eignet sich insbesondere für die Formgebung von Feuerfestmassen durch Extrusion, Pressen und hier speziell für das uniaxiale und kaltisostatische Pressen.

Nach der Formgebung werden die Formkörper bei einer Temperatur 400 °C bis 1.600 °C in reduzierender Atmosphäre, beispielsweise in einer Argon- oder StickstoffAtmosphäre, verkokt. Die Verkokung kann alternativ aber auch direkt vor der ersten Anwendung als Feuerfestkörper am Einsatzort erfolgen.

Gemäß einer Ausführungsform des erfindungsgemäßen Verfahrens kann nach der Verkokung eine thermische Behandlung bei einer Temperatur von 800 °C bis 1.600 °C und beispielsweise mit einer Heizrate von 10 K/min bis 40 K/min in Luftatmosphäre erfolgen. Diese thermische Wärmebehandlung kann auch beim Aufheizen von Feuerfestformkörpern oder Feuerfestausmauerungen in metallurgischen Aggregaten direkt vor der Anwendung zur Minimierung von thermischen Spannungen stattfinden.

Die Feuerfestkörper können mit einer Außenglasur beschichtet werden und so gegenüber Sauerstoff geschützt werden. Gemäß einer Ausführungsform der Erfindung entsprechend der Lehre der WO 2011/020832 A1 können durch Zugabe von Si und Borax kohlenstoffgebundene, feuerfeste Erzeugnisse erhalten werden, die nach einer oxidativen, thermischen Behandlung nach dem Verkoken eine glasierte Oberfläche aufweisen, eine sogenannte Selbstglasur. Diese bietet zusätzlichen Schutz gegenüber einem Angriff von Sauerstoff auf den Kohlenstoff des Feuerfestformkörpers bei hohen Einsatztemperaturen.
**Abbildung 1** zeigt ein Foto von verkokten Feuerfestbauteilen (Formkörpern), die nach dem erfindungsgemäßen Verfahren hergestellt wurden.
**Abbildung 2** zeigt Geometrie und Maße eines Bauteils aus Abbildung 1.
**Abbildung 3** stellt die Porengrößenverteilungen der erfindungsgemäß erzeugten feuerfesten Formkörper (Beispiel 1 Rezeptur 1-7) derjenigen von analog hergestellten aber harzgebundenen Formkörpern (Beispiel 1 Rezeptur 8) gegenüber.

Überraschenderweise stellte sich bei Bestimmung der Porengrößenverteilung mit Quecksilber-Porosimetrie gemäß DIN 66133 aus Juni 1993 heraus, dass die primären Porengrößen (Porendurchmesser) in den erfindungsgemäß erzeugten Formkörpern bei Verkokung auf Einsatztemperatur des Bauteils deutlich größer als die Poren bei analoger Herstellung mit einem Harz als Bindemittel sind. Ein Vergleich der Porengrößenverteilung ist in den Beispielrezepturen gezeigt. Daraus entfaltet sich das Potential des neuen kohlenstoffgebundenen Werkstoffes basierend auf dem neuen Bindemittelsystem. Über die Kombination von Steinkohlenteer- oder Petropech und einem Kohlenhydrat mit speziellen Additiven ergibt sich eine Mikrostruktur, die bei ähnlichen Festigkeiten größere Poren toleriert. Damit kann eine Rissausbreitung mit einer höheren Wahrscheinlichkeit an den größeren Poren entschärft werden. Der Fachmann bezeichnet dies als einen Beitrag zur größeren Thermoschockbeständigkeit des Systems.

Die folgenden Beispiele (Herstellungs- und Anwendungsbeispiele und Prüfbeispiele), dienen der weiteren Erläuterung der Erfindung.

### BEISPIELE

### Beispiel 1 Rezepturen 1-8 - Herstellung von Feuerfestformkörpern

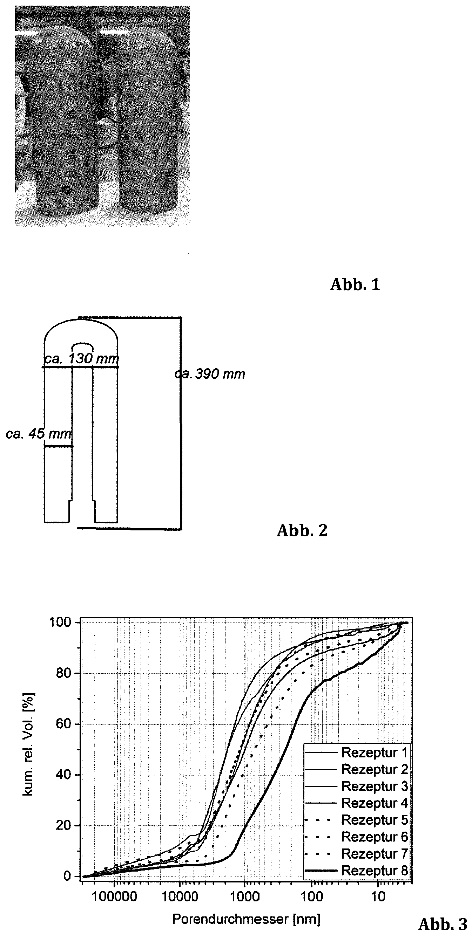

Es werden Stopfenbauteile gemäß Abbildung 1 unter Verwendung des erfindungsgemäßen Bindemittels auf Grundlage von Al₂O₃-C-Materialien hergestellt.

Nach Einwaage der Trockenstoffe gemäß der folgenden Tabelle 1 erfolgt der Mischvorgang in zwei Stufen in einem Eirich Intensivmischer (300 U/min): (I) Zwei Minuten mischen, manuelles Umwälzen der Masse, (II) fünf Minuten mischen. Die Trockenstoffmischung wird durch Zugabe des Flüssigbinders granuliert. Die Dosierung des Flüssigbinders erfolgt in drei Stufen, wobei jeweils fünf Minuten lang gemischt wird. Die Masse wird anschließend jeweils dreimal fünf Minuten lang granuliert. Je nach Beispielrezeptur wird das Benetzungsmittel Gypsperse^{®} XL3 (ein wasserlösliches Salz aus mit Formaldehyd kondensierten Naphthalinsulfonsäuren) und/oder das Additiv Titandioxid dem Flüssigbinder zugemischt und im Anschluss zur Trockenstoffmischung gegeben. Nach Beenden der Granulierung wird das Trennhilfsmittel Magnesiumstearat dem Gemenge hinzugefügt und innerhalb von zwei Minuten untergemischt.

Die Formgebung erfolgt nach 48 Stunden Lagerzeit (Mauken) durch kalt-isostatisches Pressen bei Pressdrücken von 100 MPa. Die Grünkörper werden im Anschluss in reduzierender Atmosphäre (Koksbett) mit einer Heizrate von 3 K/min und einer Haltezeit von fünf Stunden bei 1400 °C verkokt.

In Tabelle 1 werden die erfindungsgemäßen Beispielrezepturen 1 bis 7 und Vergleichsrezeptur 8 dargestellt. Die Analysendaten zu den erfindungsgemäßen Beispielen und dem Vergleichsbeispiel sind in Tabelle 2 gezeigt. Die Rohstoffe wie Aluminiumoxid und Graphit werden in handelsüblichen Fraktionen eingesetzt. Erfindungsgemäß werden Bindemittel und Hilfsstoffe während des Mischprozesses hinzugefügt.

**Tabelle 1: Erfindungsgemäße Rezepturen**

| **Komponenten** | | **1** | **2** | **3** | **4** | **5** | **6** | **7** | **8** |
|---|---|---|---|---|---|---|---|---|---|
| | | Gew.-% | Gew.-% | Gew.-% | Gew.-% | Gew.-% | Gew.-% | Gew.-% | Gew.-% |
| Trockenstoffe | Aluminiumoxid | 70 | 70 | 70 | 70 | 70 | 70 | 70 | 72 |
| | Graphit | 20 | 20 | 20 | 20 | 20 | 20 | 20 | 20 |
| | Silizium | 4 | 4 | 4 | 4 | 7 | 4 | 4 | 4 |
| | Siliziumdioxid | 4 | 4 | 4 | 4 | 4 | 4 | 4 | 4 |
| | Natriumtetraborat | 2 | 2 | 2 | 2 | 2 | 2 | 2 | - |
| Festbinder | CARBORES^{®} P | 4 | 6 | 4 | 4 | 4 | 4 | 4 | - |
| Flüssigbinder | wässrig. Fruktosesirup (70%) | 8-9 | 8-9 | 7-8 | 7-8 | 7-8 | - | - | - |
| | wassrig. Invertzuckersirup (72%) | - | - | - | - | - | 8-9 | 7-8 | - |
| | Phenolharz (Momentive PF 7280 FL 01) | - | - | - | - | - | - | - | 10 |
| Härter | Hexamethylentetramin (Hexa) | 0,3 | 0,3 | 0,3 | - | - | 0,3 | 0,3 | 1 |
| Trennhilfsmittel | Mg-Stearat | 0,5 | 0,5 | 0,5 | 0,5 | 0,5 | 0,5 | 0,5 | 0,5 |
| Presshilfsmittel | Zusoplast | - | - | - | - | - | - | - | 1 |
| Benetzungsmittel | Gypsperse^{®} XL3 | 0,1 | - | - | 0,1 | - | 0,1 | - | - |
| Additiv | Titandioxid | - | - | 0,7 | - | 0,7 | - | 0,7 | - |

**Tabelle 2: Analysendaten der erfindungsgemäßen Rezepturen**

| | **1** | **2** | **3** | **4** | **5** | **6** | **7** | **8** |
|---|---|---|---|---|---|---|---|---|
| Offene Porosität nach DIN EN 993-1 in [%] | 20,5 | 20,6 | 18,3 | 21,1 | 18,5 | 19,4 | 18,9 | 21,1 |
| Kaltbiegefestigkeit nach DIN EN 993-6 in [MPa] | 9,0 | 10,2 | 10,2 | 5,1 | 9,2 | 8,7 | 11,6 | 3,9 |
| Rohdichte nach DIN EN 993-1 in [g/cm³] | 2,6 | 2,4 | 2,5 | 2,6 | 2,5 | 2,5 | 2,5 | 2,5 |
| Porengrößenanalyse nach DIN 66133 in [µm] | | | | | | | | |
| 30 Vol.-% | 2,1 | 3,0 | 3,2 | 2,1 | 2,4 | 1,6 | 2,0 | 0,6 |
| 50 Vol.-% | 1,0 | 1,8 | 1,9 | 1,1 | 1,1 | 0,7 | 1,1 | 0,2 |
| 70 Vol.-% | 0,5 | 0,8 | 1,1 | 0,6 | 0,5 | 0,3 | 0,6 | 0,1 |

Die Summe der in Tabelle 1 angegebenen Trockenstoffe ergibt wie in der Feuerfestindustrie üblich 100%. Alle Prozentangaben der Bindemittel und Hilfsstoffe beziehen sich auf die Masse der Trockenstoffe.

Ein Vergleich der Porengrößenanalyse der erfindungsgemäßen Feuerfestformkörper 1 bis 7 mit einem in analoger Weise mit Harz als Bindemittel hergestelltem Formkörper zeigt, dass bei jeweils gleichem relativen Porenvolumen die Porengröße der erfindungsgemäßen Feuerfestformkörper 1 bis 7 im Vergleich zum Harz-gebundenen System 8 zu höheren Werten verschoben sind. 30% des Porenvolumens der erfindungsgemäßen Feuerfestformkörper 1 bis 7 weisen einen Porendurchmesser von 1,6-3,2 µm auf, wohingegen bei dem phenolharzgebundenen System 8 ein Porendurchmesser von 0,6 µm gefunden wurde. Bei 50% bzw. 70% des Porenvolumens der erfindungsgemäßen Feuerfestformkörper 1 bis 7 wurden Porendurchmesser von 0,7-1,9 µm bzw. 0,28-1,05 µm gefunden, welche größer als die vergleichbaren Messwerte von 0,2 µm bzw. 0,1 µm des phenolharzgebundenen System 8 sind.

### Beispiel 2 - Tauchversuche mit den Stopfen der Rezepturen 1 und 3 in einer industriellen Stahlschmelze

Die Formkörper werden unter industrienahen Bedingungen in ein Stahlbad getaucht. Die Stahlschmelze weist eine Temperatur von 1.700 °C auf und ist mit einer sauren Schlacke bedeckt. Der Tauchprozess wird zweimal je zwei Minuten lang mit einer Abkühlphase bei Raumtemperatur von fünf Minuten durchgeführt. Die Formkörper weisen nach der zweifachen Thermoschockbeanspruchung ohne Vorwärmung eine hohe Restfestigkeit auf (Tabelle 3).

**Tabelle 3: Thermoschockbeanspruchung der Formkörper der Rezepturen 1 und 3**

| **Beispielrezeptur** | **KBF [MPa]ᵥₒᵣ** | **KBF_{nach} [MPa]** | **Δ** |
|---|---|---|---|
| | [MPa] | [MPa] | [%] |
| 1 | 9,0 | 5,5 | -38,9 |
| 3 | 10,2 | 9,8 | -3,9 |

In der Tabelle werden die Werte der Kaltbiegefestigkeiten (KBF) nach DIN EN 993-6 vor und nach der Thermoschockbehandlung angegeben.

Vergleichsversuche in der industriellen Stahlschmelze mit einem Harzbinder auf Phenolharzbasis anstatt von Fructose haben nach der Thermoschockbeanspruchung Festigkeitsverluste von 40 bis 60% und damit ähnliche (Beispielrezeptur 1) und bzw. höhere Festigkeitsverluste als bei Beispielrezeptur 3 gezeigt.

### Beispiel 3 - Änderung der Stahlzusammensetzung durch Tauchversuche

Es wurde untersucht, wie eine Stahlzusammensetzung durch die Tauchbehandlung mit den erfindungsgemäß hergestellten Feuerfestformkörpern beeinträchtigt wird. Dazu wurden die Feuerfestformkörper, wie zuvor beschrieben, in eine flüssige Stahlschmelze eingetaucht. Anschließend wurde die Konzentration bestimmter in der Tabelle 4 angegebener Stoffe in der Stahlschmelze bestimmt und mit den Konzentrationen dieser Stoffe verglichen, die vor dem Eintauchen der Feuerfestformkörper in der Stahlschmelze ermittelt wurden. Die Stahlzusammensetzungen vor und nach sechs 15 Minuten langen Tauchschritten sind in Tabelle 3 dargestellt.

**Tabelle 4: Stahlzusammensetzung nach Tauchversuchen in Gew.-%**

| | C | Si | Mn | P | S | Cr |
|---|---|---|---|---|---|---|
| vorher | 0,203 | 0,377 | 0,768 | 0,011 | 0,009 | 0,136 |
| nachher | 0,210 | 0,373 | 0,736 | 0,012 | 0,008 | 0,149 |
| | Ni | Mo | Cu | Al | Co | V |
| vorher | 0,080 | 0,028 | 0,058 | 0,004 | 0,008 | 0,007 |
| nachher | 0,081 | 0,028 | 0,058 | 0,002 | 0,008 | 0,007 |

Die Ergebnisse der Tabelle 4 zeigen, dass durch das mehrmalige Eintauchen eines Feuerfestformkörpers in die Stahlschmelze in derselben keine Verunreinigungen ergeben. Das spricht auch für die gute Bindewirkung des erfindungsgemäß eingesetzten Bindemittelsystems.

Computertomographische Aufnahmen der erfindungsgemäß erhaltenen Probekörper (Rezepturen 1 und 3) zeigten nach Tauchversuchen eine Struktur frei von Rissen größerals 50 µm.

## Patentansprüche

1. Verfahren zur Herstellung eines kohlenstoffgebundenen Feuerfesterzeugnisses, in dem feuerfeste Rohstoffe mit einem Bindemittel im Kaltmischverfahren gemischt, in einen Formkörper überführt und der Formkörper vor oder während der Anwendung als Feuerfesterzeugnis einer Verkokung unterzogen wird, **dadurch gekennzeichnet, dass** das Bindemittel Steinkohlenteer- oder Petropech und ein niedermolekulares Kohlenhydrat enthält.

2. Verfahren nach Anspruch 1, **dadurch gekennzeichnet, dass** das Steinkohlenteerpech oder das Petropech weniger als 500 mg/kg Benzo[a]pyren, vorzugsweise weniger als 300 mg/kg Benzo[a]pyren, enthält.

3. Verfahren nach Anspruch 1, **dadurch gekennzeichnet, dass** das Kohlenhydrat in einem wässrigen Gemisch oder in wässriger Lösung vorliegt.

4. Verfahren nach Anspruch 1, **dadurch gekennzeichnet, dass** das Kohlenhydrat ausgewählt ist aus Mono-, Di- und/oder Oligosacchariden.

5. Verfahren nach Anspruch 4, **dadurch gekennzeichnet, dass** das Kohlenhydrat ausgewählt ist aus Triosen, Tetrosen, Pentosen und Hexosen.

6. Verfahren nach Anspruch 5, **dadurch gekennzeichnet, dass** das Kohlenhydrat ausgewählt ist aus Glucose, Fructose, Sorbitol, Mannose, Xylose, Arabinose, Galactose und deren Gemischen und/oder ausgewählt ist aus Maltose, Saccharose, Cellobiose, Lactose und deren Gemischen sowie aus Gemischen von Kohlenhydraten beider zuvor genannten Listen.

7. Verfahren nach einem der Ansprüche 1 bis 6, **dadurch gekennzeichnet, dass** als funktionale Additive in Körnungen kleiner als 100 µm wie Al, Mg, Si, Fe, B oder Oxide wie SiO₂, TiO₂, B₂O₃ oder Borax oder Karbide, wie SiC, B₄C, TiC oder Nitride, wie Si₃N₄, AIN, TiN oder Boride, wie BN, TiB₂, zugesetzt werden.

8. Verfahren nach einem der Ansprüche 1 bis 7, **dadurch gekennzeichnet, dass** man zur Teilvernetzung der Kohlenhydrate 0 bis 50 Gew.-% der für die Vernetzung von Phenolharzen üblichen Menge an einem Vernetzungsmittel, insbesondere Hexamethylentetramin, zusetzt.

9. Verwendung von niedermolekularen Kohlenhydraten als Bindemittel bei der Herstellung von Feuerfesterzeugnissen.

10. Verwendung nach Anspruch 9, **dadurch gekennzeichnet, dass** das Kohlenhydrat ausgewählt ist aus Mono-, Di- und Oligosacchariden.

11. Verwendung nach Anspruch 9, **dadurch gekennzeichnet, dass** das Kohlenhydrat ausgewählt ist aus Triosen, Tetrosen, Pentosen, Hexosen und deren Gemischen.

12. Verwendung nach Anspruch 9, **dadurch gekennzeichnet, dass** das Kohlenhydrat ausgewählt ist aus Glucose, Fructose, Sorbitol, Mannose, Xylose, Arabinose, Galactose und deren Gemischen.

13. Feuerfester Formkörper, erhältlich nach einem Verfahren der Ansprüche 1 bis 8 mit einem oder mehreren Trockenstoffen, ausgewählt aus oxidischen Körnungen, nichtoxidischen Körnungen, Kohlenstoff, metallischen Körnungen, Gemischen derselben und einem Bindemittel, **dadurch gekennzeichnet, dass** 30 Vol.-% des Porenvolumens des Formkörpers nach Verkokung auf Einsatztemperatur aus Poren mit einem Porendurchmesser von größer als 1 µm, gemessen durch Quecksilberintrusion nach DIN 66133 von Juni 1993, gebildet sind.

14. Feuerfester Formkörper nach Anspruch 13, **dadurch gekennzeichnet, dass** 50 Vol.-% des Porenvolumens aus Poren mit einem Porendurchmesser von größer als 500 nm gebildet sind.

15. Feuerfester Formkörper nach Anspruch 13, **dadurch gekennzeichnet, dass** 70 Vol.-% des Porenvolumens aus Poren mit einem Porendurchmesser von größer als 200 nm gebildet sind.

16. Feuerfester Formkörper nach Anspruch 13, **dadurch gekennzeichnet, dass** der Werkstoff nach Verkokung auf Einsatztemperatur eine Porenvolumenverteilung, gemessen durch Quecksilberintrusion nach DIN 66133 von Juni 1993, mit den folgenden Kennzahlen aufweist:
30 Vol.-% des Porenvolumens aus Poren mit einem Porendurchmesser von größer als 1 µm,
50 Vol.-% des Porenvolumens aus Poren mit einem Porendurchmesser von größer als 500 nm und
70 Vol.-% des Porenvolumens aus Poren mit einem Porendurchmesser von größer als 200 nm.
